Europäisches Patentamt

(19) European Patent Office

Office européen des brevets

(11) Numéro de publication: **0 176 424**

**A1**

(12) **DEMANDE DE BREVET EUROPEEN**

(21) Numéro de dépôt: **85401758.9**

(22) Date de dépôt: **10.09.85**

(51) Int. Cl.⁴: **A 01 K 37/00**

(30) Priorité: **10.09.84 FR 8413841**

(43) Date de publication de la demande:
**02.04.86 Bulletin 86/14**

(84) Etats contractants désignés:
**BE GB IT NL**

(71) Demandeur: **Laumain, Michel**
**"Elevage des vieux Auberts" Mouliherne**
**F-49390 Vernantes(FR)**

(72) Inventeur: **Laumain, Michel**
**"Elevage des vieux Auberts" Mouliherne**
**F-49390 Vernantes(FR)**

(74) Mandataire: **Ahner, Francis et al,**
**CABINET REGIMBEAU 26, avenue Kléber**
**F-75116 Paris(FR)**

(54) **Casque pour oiseaux, en particulier pour gallinaces, interdisant l'usage agressif du bec.**

(57) La présente invention concerne un casque pour oiseaux, en particulier pour gallinacés, interdisant l'usage agressif du bec. Le casque comprend une coiffe (10) destinée à recouvrir le bec des oiseaux et des moyens (50) de blocage destinés à être engagés dans les narines de l'oiseau pour immobiliser la coiffe. Cette dernière est constituée d'une calotte supérieure (11) qui s'étend vers l'arrière jusqu'aux arcades sourcillières de l'oiseau et de deux joues latérales (12, 13), divergeant vers le bas et présentant vers l'avant une hauteur couvrant l'ouverture maximum du bec.

FIG-1

EP 0 176 424 A1

# CASQUE POUR OISEAUX, EN PARTICULIER POUR GALLINACES, INTERDISANT L'USAGE AGRESSIF DU BEC.

La présente invention concerne le domaine de l'élevage des oiseaux, notamment des gallinacés, et tout particulièrement des faisans.

La présente invention concerne plus précisément un casque pour oiseaux, interdisant l'usage agressif du bec par ceux-ci.

On sait que les coups de bec donnés par les oiseaux, en particulier les gallinacés tels que les faisans, au cours de combats avec leurs congénères peuvent induire des blessures conduisant le plus souvent à la mort de l'oiseau blessé.

Par ailleurs, sans induire nécessairement des blessures, l'usage agressif du bec peut conduire à une plumation par picotage des congénères qui, indirectement, entraîne fréquemment la mort des oiseaux ayant un plumage de protection déficient, notamment chez les jeunes oiseaux.

Cela est tout particulièrement le cas lors de l'élevage des oiseaux. En effet, la concentration inévitable dans le cadre de l'élevage et l'effet de claustration induit,renforcent l'agressivité.

On notera également que les oiseaux ayant subi une plumation par leurs congénères sont le plus souvent impropres à la vente tout particulièrement lorsque ces oiseaux sont destinés à la chasse.

Pour limiter les pertes ainsi subies, les éleveurs ont tenté d'entraver l'usage agressif naturel du bec à l'aide de différents dispositifs.

Un premier type de dispositif d'entrave, couramment dénommé lunettes, est adapté pour limiter le champ de vision des oiseaux. Ces dispositifs sont généralement fixés sur le bec des oiseaux. On constate cependant dans la pratique que de tels dispositifs gênent considérablement l'oiseau dans ses déplacements et interdisent même quasi totalement l'exercice nécessaire pour une croissance normale des oiseaux. Ces dispositifs notamment interdisent le vol des oiseaux. Cet exercice de vol est pourtant particulièrement important pour les oiseaux destinés à être libérés dans la nature.

Un second type de dispositif décrit par exemple dans les brevets Français 2 157 844 et 2 336 878, est formé d'un anneau ouvert inséré entre les machoires supérieure et inférieure du bec de l'oiseau et engagé par ses extrémités dans les narines de celui-ci pour être ainsi immobilisé. Ces dispositifs ont en fait pour but d'interdire la fermeture complète du bec.Ces dispositifs cependant n'empêchent pas totalement l'usage agressif du bec et ont par ailleurs pour inconvénient de déformer ce dernier.

Un troisième type de dispositif décrit dans les brevets Français 2 326 863, 2 325 321, 2 473 264, 2 304 286, ou dans les brevets Américains 2 018 796, 3 446 187, 3 704 689 et 2 287 190 est formé d'un casque destiné à recouvrir la machoire supérieure du bec et muni de moyens de blocage engagés dans les narines du bec pour immobiliser le casque. Ces moyens de blocage sont généralement formés d'une goupille insérée dans des orifices ménagés latéralement dans le casque et dans les narines du bec en traversant la cloison nasale de l'oiseau.

Les dispositifs de ce dernier type jusqu'ici proposés présentent cependant de nombreux inconvénients.

D'une part, et cela est bien entendu fondamental, ces dispositifs ne sont pas totalement efficaces en ce sens qu'ils n'interdisent pas complètement l'usage agressif du bec.

D'autre part, dans la pratique, les oiseaux équipés de ces dispositifs restent souvent accrochés dans les grillages et surtout les filets délimitant les cages

3

d'élevage. L'accrochage des oiseaux peut être dû soit au casque lui-même, soit à la goupille de blocage.

De plus, les casques jusqu'ici proposés perturbent l'alimentation des oiseaux.

Enfin, ces casques gênent considérablement l'oiseau dans les tentatives de nettoyage de son plumage.

D'autres dispositifs plus complexes illustrés par exemple dans le brevet Français 2 340 043 ont été proposés.

Ces dispositifs toutefois s'avèrent peu efficaces et surtout sont d'un coût très élevé prohibitif pour une utilisation à grande échelle.

Devant l'inefficacité et les nombreux inconvénients des dispositifs d'entrave de bec jusqu'ici proposés, les éleveurs ont parfois été contraints de revenir à une technique plus ancienne consistant à enlever une partie du bec de l'oiseau. Différents appareils décrits par exemple dans les brevets Français 2 390 898 et 2 464 700 ou dans les brevets Américains 2 501 283 et 3 390 679 ont été proposés à cet effet. Ces appareils sont généralement adaptés soit pour brûler la machoire supérieure du bec de l'oiseau, soit pour couper une partie du bec.

Cette opération est cependant contraire aux techniques d'élevage préconisées de nos jours qui tendent notamment à interdire les mutilations d'animaux. Par ailleurs, cette opération qui doit être renouvelée fréquemment, induit un taux de mortalité élevé et ne s'avère pas totalement efficace.

Le problème à résoudre est donc d'interdire l'usage agressif du bec par les oiseaux, notamment la plumation par piquage, sans perturber l'alimentation de l'animal ni l'utilisation du bec en vue d'un nettoyage du plumage, sans risquer de rendre l'oiseau prisonnier des filets de la cage d'élevage et surtout sans mutiler les oiseaux.

Le problème ainsi posé est résolu selon l'invention par un casque pour oiseaux, en particulier pour gallinacés, interdisant l'usage agressif du bec, comprenant une coiffe destinée à recouvrir le bec des oiseaux et comportant des moyens de blocage destinés à être engagés dans les narines de l'oiseau pour immobiliser la coiffe, le casque étant caractérisé par le fait que la coiffe est constituée :

- d'une calotte supérieure incurvée et convexe vers l'extérieur, conformée à la géométrie du sommet de la machoire supérieure du bec et s'étendant en arrière des moyens de blocage en position adjacente aux arcades sourcillières de l'oiseau afin de garantir une bonne tenue de la coiffe au cours d'une croissance importante du bec, et

- de deux joues latérales généralement planes prolongeant vers le bas la calotte supérieure, espacées relativement pour encadrer le bec, les joues latérales divergeant légèrement vers le bas et présentant à l'avant une hauteur couvrant l'ouverture maximum du bec.

Le prolongement vers l'arrière du casque en position adjacente aux arcades sourcillières de l'oiseau permet un maintien correct en position du casque et évite notamment que l'oiseau puisse faire basculer le casque autour des moyens de blocage, rendant ainsi le casque totalement inefficace.

La divergence relative des joues latérales du casque permet à l'oiseau de se nourrir sans la moindre gêne et de même de nettoyer son plumage sans la moindre difficulté.

Enfin, puisque les joues latérales présentent à l'avant une hauteur couvrant l'ouverture maximum du bec un usage de la pointe du bec à des fins agressives est interdit en toute sécurité.

De préférence, la calotte supérieure du casque possède au moins un évidement traversant. Cette disposition permet de faciliter la respiration de l'oiseau, et limiter la condensation ou la fermentation, par exemple d'aliments, entre le casque et le bec de l'oiseau.

Selon une autre caractéristique avantageuse de l'invention, les joues latérales sont munies chacune d'un alésage traversant adapté pour recevoir en traversée une goupille de blocage.

Cette goupille est conformée pour ne pas présenter d'arêtes susceptibles d'accrocher dans les filets des cages d'élevage.

Par ailleurs, le Demandeur a constaté qu'il était souhaitable de réaliser le casque en matériau opaque au rayonnement visible,  infra-rouge et ultraviolet, pour éviter une brûlure du bec et obtenir un bec de couleur convenable.

D'autres caractéristiques et avantages de la présente invention apparaîtront à la lecture de la description détaillée qui va suivre et en regard des dessins annexés donnés à titre d'exemple non limitatif et sur lesquels :

- la figure 1 illustre schématiquement une vue en perspective d'un casque conforme à la présente invention,

- la figure 2 représente une vue latérale de la coiffe d'un casque conforme à la présente invention,

- la figure 3 représente une vue de dessus de la coiffe d'un casque conforme à la présente invention,

- la figure 4 représente une vue latérale d'une goupille d'un casque conforme à la présente invention.

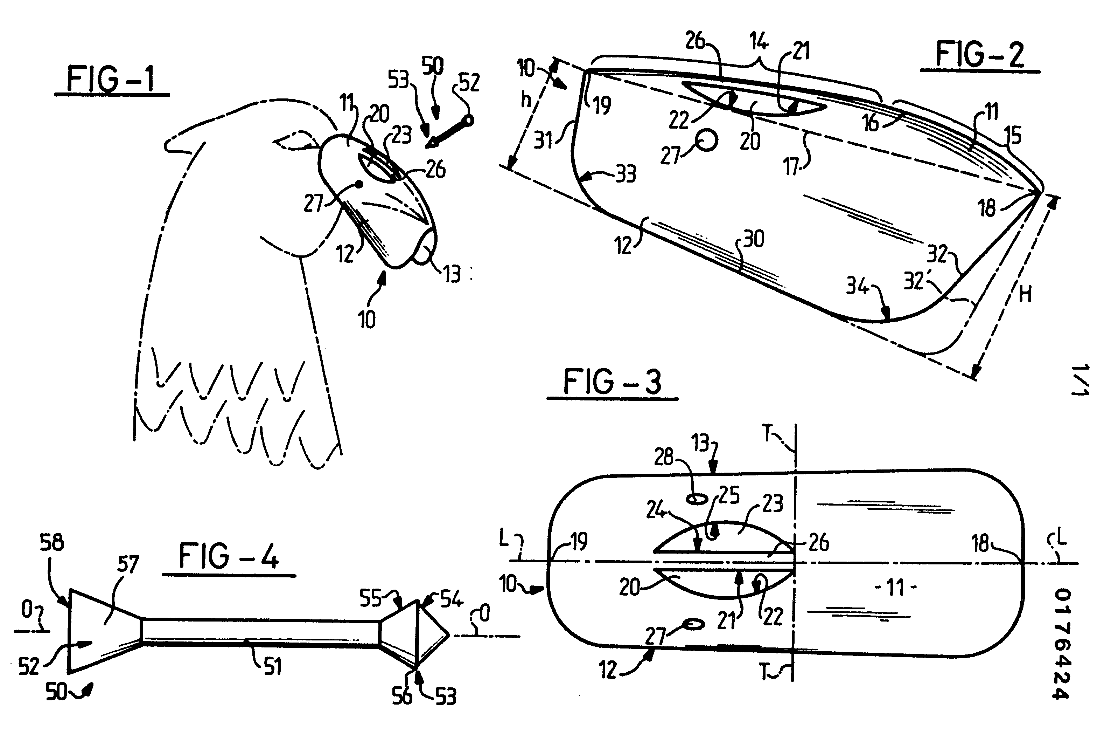

Comme cela est représenté sur les figures 1 à 4 annexées, le casque de protection conforme à la présente invention comprend en combinaison une coiffe 10 et une goupille 50.

La coiffe 10 est adaptée pour recouvrir par le haut et latéralement le bec de l'oiseau (comme illustré sur la figure 1) et la goupille 50 est adaptée pour être engagée dans la coiffe 10 et dans les narines de l'oiseau afin d'immobiliser la coiffe en position.

La coiffe 10 se compose plus précisément d'une calotte supérieure 11 convexe vers le haut et prolongée vers le bas par deux joues latérales 12, 13 généralement planes. La longueur de la coiffe 10 est bien entendu supérieure à la longueur du bec et adaptée de telle sorte que la pointe du bec ne dépasse pas vers l'avant de la coiffe 10.

La calotte supérieure 11 est incurvée (convexe vers le haut en position d'utilisation), à la fois dans la direction longitudinale et dans la direction transversale illustrées respectivement L-L et T-T sur la figure 3 et correspondant l'une à la direction longitudinale du bec, l'autre à sa direction transversale.

Le rayon de courbure transversale de la calotte supérieure 11 à l'avant de la coiffe 10 est de préférence plus faible que le rayon de courbure transversale à l'arrière de la coiffe 10.

La calotte supérieure 11 du casque considérée dans le plan de symétrie longitudinal L-L, présente de l'arrière vers l'avant une première section 14 de grand rayon de courbure suivie d'une seconde section 15 de plus faible rayon de courbure.

Le sommet 16 du masque dans ce plan de symétrie longitudinal, défini comme étant le point 16 le plus éloigné d'une corde 17 reliant les points avant

18 et arrière 19 de la surface supérieure de la calotte 10 coïncidant avec le plan longitudinal L-L, est situé environ au 1/4 de la longueur du masque considérée à partir de l'avant de celui-ci.

La calotte supérieure 11 présente deux évidements traversants 20, 23 formés de part et d'autre d'une nervure centrale longitudinale 26.

Plus précisément, ces évidements 20, 23 sont délimités par une génératrice rectiligne 21, 24 coïncidant avec un bord respectif de ladite nervure 26 et un bord incurvé 22, 25 généralement en secteur de cercle. Ces évidements 20, 23 allongés dans la direction du plan longitudinal L-L possèdent de préférence une longueur de l'ordre du 1/3 de la longueur de la coiffe, le centre des évidements étant situé environ aux 6/9 de la longueur de la coiffe à partir de l'avant.

Les deux joues latérales 12, 13 divergent légèrement vers le bas.

L'inclinaison relative des deux joues 12, 13 est comprise entre 20° et 40°, de préférence sensiblement égale à 30°.

La hauteur H des joues 12, 13 à l'avant de la coiffe est supérieure à la hauteur h des joues à l'arrière de celle-ci. Comme cela est illustré sur la figure 2, les hauteurs h et H sont considérées transversalement au bord libre inférieur 30 de la coiffe.

Chaque joue 12, 13 est munie d'un alésage cylindrique 27, 28 traversant, en dessous des évidements 20, 23, ces alésages 27, 28 sont destinés à recevoir la goupille de retenue 50.

Les alésages 27, 28 sont de préférence ménagés aux 2/3 de la longueur de la coiffe 10 à partir de l'avant de celle-ci.

De préférence, des coiffes 10 de tailles différentes sont prévues.

Une coiffe de petite taille est initialement placée sur le bec des jeunes oiseaux, puis au bout de quelques semaines, cette première coiffe est retirée et remplacée par une coiffe de taille supérieure.

Cette disposition a pour but notamment de ne pas perturber la croissance du bec de l'oiseau.

Comme cela est illustré sur la figure 2, le contour des joues latérales 12, 13 est délimité vers le bas par un bord libre rectiligne 30, vers l'arrière par un bord libre rectiligne 31 transversal au bord inférieur 30 précité, et vers l'avant par un bord libre 32 transversal au bord inférieur 30 ou incliné selon un angle obtus par rapport à celui-ci.

Les bords libres 30, 31 sont reliés par un bord arrondi 33 et les bords libres 30, 32 sont reliés par un bord arrondi 34.

On a représenté sur la figure 2 en trait plein le bord avant 32 d'une coiffe pour casque conforme à la présente invention destiné à des faisans. Ce bord avant est de préférence incliné selon un angle obtus par rapport au bord libre inférieur 30.

On a également représenté sur la figure 2 en traits interrompus le bord avant 32'd'une coiffe pour casque conforme à la présente invention destiné à des faisanes ou faisandeaux. Ce bord avant 32' est de préférence transversal au bord libre inférieur 30.

La goupille 50 est formée d'un corps cylindrique allongé 51 muni à une première extrémité d'une tête élargie 52 et muni à une seconde extrémité d'une pointe d'engagement 53.

La pointe d'engagement 53 est de préférence délimitée vers l'avant par une surface 54 convergeant vers l'axe longitudinal O-O du corps 51 en éloignement de la tête 52 et vers l'arrière par une surface 55 convergeant vers l'axe longitudinal O-O en rapprochement de la tête 52.

Les surfaces 54, 55 convergeant vers l'axe O-O sont avantageusement coniques.

La tête 52 est de préférence tronconique. Plus précisément, la surface périphérique tronconique 57 de la tête converge vers l'axe O-O en rapprochement de la pointe d'engagement 53, tandis que la base 58 du tronc de cône ainsi formé est transversale à l'axe O-O et sert d'appui au doigt de l'utilisateur pour l'engagement de la goupille dans les orifices 27, 28 du casque et dans les narines de l'oiseau.

Cette goupille 50 ne présente pas de structure risquant d'accrocher les filets délimitant l'espace d'élevage ce qui constitue un avantage très important par rapport aux réalisations antérieures de goupilles qui comportaient fréquemment des têtes ou pointes susceptibles de venir en prise d'accrochage avec les filets précités.

Le plus grand diamètre transversal de la pointe d'engagement 53 délimité par la génératrice circulaire 56 d'intersection des surfaces 54 et 55 précitées doit être légèrement supérieur au diamètre des alésages 27, 28 tandis que le diamètre du corps 51 est légèrement inférieur au diamètre des alésages 27, 28 et que le diamètre de la base 58 de la tête 52 est supérieur au diamètre des mêmes alésages 27, 28.

Ainsi, la goupille 50 peut être introduite par la pointe d'engagement 53 dans les alésages 27, 28, avec effet de blocage grâce à une légère déformation de la matière constitutive des joues latérales 12, 13 et/ou de la pointe d'engagement 53.

L'utilisation du casque conforme à la présente invention est simple et rapide.

Il suffit en effet après avoir recouvert la machoire supérieure du bec de l'oiseau à l'aide de la coiffe 10 d'insérer la goupille 50 dans un alésage 27 ou 28 par la pointe d'engagement 53 et de pousser la goupille de telle sorte que celle-ci pénètre dans une narine de l'oiseau, traverse le cloison nasale puis ressorte par la seconde narine et traverse le second alésage 28 ou 27.

La géométrie de la pointe d'engagement permet de ne pas blesser l'oiseau au cours de cette opération.

La tête 52 et la pointe d'engagement 53 sont ainsi disposées de part et d'autre des joues latérales 12, 13, sur l'extérieur de celles-ci ce qui interdit un retrait fortuit de la goupille et maintient par conséquent en position en toute sécurité le casque sur le bec de l'oiseau.

Néanmoins, l'éleveur peut aisément retirer la goupille 50 par traction sur la tête 52, s'il souhaite enlever le casque (grâce à la surface 55).

Cette opération peut en particulier être nécessaire avant de libérer les oiseaux dans la nature ou encore pour changer le modèle de casque lorsque les becs des oiseaux ont grandi et exigent un casque de taille supérieure.

Bien entendu, le casque conforme à la présente invention est susceptible de diverses variantes de réalisation.

Selon un mode de réalisation particulier donné à titre d'exemple non limitatif de la présente invention un casque pour faisans comprend une coiffe 10 présentant une longueur de corde 17 de 44 mm, des évidements 20, 23 d'une longueur de 15 mm ménagés à 16 mm du bord avant, une hauteur avant H de joues latérales de l'ordre de 17 mm, et des alésages 27, 28 d'un diamètre de 2 mm ménagés à 30 mm du bord avant de la coiffe.

Selon un mode de réalisation particulier donné à titre d'exemple non limitatif de la présente invention, un casque pour faisandeaux comprend une coiffe 10 présentant une longueur de corde 17 de 33 mm, des évidements 20, 23 d'une longueur de 11 mm ménagés à 14 mm du bord avant, une hauteur avant H des joues latérales de l'ordre de 13 mm et des alésages 27, 28 d'un diamètre de 2 mm ménagés à 20 mm du bord avant de la coiffe.

Par ailleurs, selon un mode de réalisation particulier donné à titre d'exemple non limitatif de la présente invention, la goupille standard utilisée avec les coiffes précitées possède un corps cylindrique 51 d'une longueur de 17 mm et d'un diamètre de 2 mm, une tête élargie d'un diamètre de 5 mm et une pointe d'engagement 53 dont le plus grand diamètre 56 égale 3 mm, la longueur totale de la pointe d'engagement étant de l'ordre de 5 mm.

Des essais réalisés à l'aide de casques conformes à la présente invention ont montré que ces dispositifs donnaient pleinement satisfaction.

Plus précisément, ces dispositifs empêchent l'usage agressif du bec, sans perturber l'utilisation du bec pour le nettoyage du plumage, l'alimentation des oiseaux ou l'exercice, tel que le vol, de ceux-ci, sans gêner la croissance du bec, ni induire de risque d'accrochage dans les filets des cages d'élevage. Par ailleurs, le casque peut aisément être retiré si cela s'avère nécessaire.

Le casque (coiffe et goupille)conforme à la présente invention est de préférence réalisé par moulage de matière plastique.

Le casque est ainsi léger, robuste et de faible coût.

Selon une variante de réalisation, les moyens de blocage sont formés d'ergots ménagés en saillie sur la surface interne des joues latérales et destinés à pénétrer dans les narines de l'oiseau.

Bien entendu, dans un tel cas, les alésages 27, 28 et la goupille 50 sont supprimés.

La mise en place du casque sur le bec de l'oiseau est alors réalisée par déformation élastique du casque par écartement relatif des joues latérales, puis libération de ce dernier lorsque les ergots précités sont disposés en regard des narines de l'oiseau pour assurer l'insertion des ergots dans les narines grâce au rappel élastique induit par la calotte supérieure 11.

Cette variante de réalisation a pour intérêt de supprimer tout élément en saillie sur la surface extérieure des joues latérales, et donc de limiter encore les risques d'accrochage dans les filets.

On a indiqué précédemment que le casque était réalisé de préférence par moulage en matériau opaque, afin d'éviter une brûlure du bec de l'oiseau par les rayons solaires.

Plus précisément encore, le casque conforme à la présente invention est de préférence réalisé en un matériau dont la couleur s'harmonise avec la couleur du plumage de l'oiseau et présente un état de surface mat.

Dans le cas de casques pour faisan, un matériau de couleur brune est de préférence utilisé.

Ainsi, le casque conforme à la présente invention ne détériore pas l'esthétique de l'oiseau en ce sens que grâce à sa couleur, sa forme et son état de surface, il n'est pas remarqué par un observateur situé à quelques dizaines de mètres de l'oiseau.

Par ailleurs, et cela est très important dans le cadre des élevages, la couleur et l'état de surface mat, évitent toute réverbération des rayons lunaires, ce qui permet un libre déplacement des oiseaux la nuit sans risque d'apeurer ou de perturber leurs congénères .

Selon l'invention, on doit entendre l'expression "ouverture maximum du bec" comme signifiant la distance séparant les pointes de la machoire supérieure et de la machoire inférieure du bec pour une ouverture naturelle maximum de ce dernier.

Le cas échéant, les joues latérales du casque comportent en outre, à l'avant, des ouvertures destinées à permettre l'élimination de la terre éventuellement retenue à l'intérieur du casque, et à l'arrière des ouvertures destinées à permettre l'élimination des déjections nasales.

REVENDICATIONS

1. Casque pour oiseaux, en particulier pour gallinacés, interdisant l'usage agressif du bec, comprenant une coiffe (10) destinée à recouvrir le bec des oiseaux et comportant des moyens de blocage (50) destinés à être engagés dans les narines de l'oiseau pour immobiliser la coiffe, le casque étant caractérisé par le fait que la coiffe est constituée :

- d'une calotte supérieure (11), incurvée et convexe vers l'extérieur, conformée à la géométrie du sommet de la machoire supérieure du bec et s'étendant en arrière des moyens de blocage (50) en position adjacente aux arcades sourcillières de l'oiseau afin de garantir une bonne tenue de la coiffe (10) au cours d'une croissance importante du bec, et

- de deux joues latérales (12, 13) généralement planes prolongeant vers le bas la calotte supérieure (10), espacées relativement pour encadrer le bec, les joues latérales (12, 13) divergeant légèrement vers le bas et présentant à l'avant une hauteur (H) couvrant l'ouverture maximum du bec.

2. Casque pour oiseaux selon la revendication 1, caractérisé par le fait que la calotte supérieure (11) présente au moins un évidement traversant (20,23).

3. Casque pour oiseaux selon l'une des revendications 1 ou 2, caractérisé par le fait que la calotte supérieure (11) présente deux évidements traversants (20, 23) ménagés de part et d'autre d'une nervure centrale (26).

4. Casque pour oiseaux selon la revendication 3, caractérisé par le fait que les deux évidements (20, 23) sont sensiblement semi-circulaires.

5. Casque pour oiseaux selon l'une des revendications 1 à 4, caractérisé par le fait que les joues latérales (12, 13) présentent chacune un alésage traversant adapté pour recevoir en traversée une goupille de blocage (50).

6. Casque pour oiseaux selon la revendication 5, caractérisé par le fait que la goupille (50) est formée d'un corps cylindrique (51) équipé à une première extrémité d'une tête élargie (52) et à une seconde extrémité d'une pointe d'engagement (53).

7. Casque pour oiseaux selon la revendiction 6, caractérisé par le fait que la pointe d'engagement (53) est formée d'une saillie solidaire du corps (51) de la goupille et délimitée par deux surfaces (54, 55) convergeant vers l'axe (O-O) de celui-ci respectivement vers la tête élargie et en éloignement de celle-ci.

8. Casque pour oiseaux selon la revendication 7, caractérisé par le fait que les surfaces convergentes (54, 55) sont tronconiques.

9. Casque pour oiseaux selon l'une des revendications 1 à 8, caractérisé par le fait qu'il est réalisé en un matériau opaque présentant un état de surface mat.

10. Casque pour oiseaux selon l'une des revendications 1 à 9, caractérisé par le fait que l'inclinaison relative des joues latérales (12, 13) est comprise entre 20°et 40° et est de préférence égale à 30°.

11. Casque pour oiseaux selon l'une des revendications 1 à 10, caractérisé par le fait que le bord libre avant et le bord libre inférieur des joues latérales (12, 13) forment entre eux un angle obtus.

1/1

0176424

FIG-1

FIG-2

FIG-3

FIG-4

Office européen
des brevets

RAPPORT DE RECHERCHE EUROPEENNE

**0176424**
Numéro de la demande

EP 85 40 1758

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 325 321 (STERLINI) | | A 01 K 37/00 |
| | ----- | | |

**DOMAINES TECHNIQUES RECHERCHES (Int Cl.4)**

A 01 K

Le présent rapport de recherche a été établi pour toutes les revendications

| Lieu de la recherche | Date d'achèvement de la recherche | Examinateur |
|---|---|---|
| LA HAYE | 13-12-1985 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82